# EUROPÄISCHE PATENTANMELDUNG

(11) **EP 1 470 957 A2**
(43) Veröffentlichungstag der Anmeldung: **27.10.2004**
(21) Anmeldenummer: 04004504.9
(22) Anmeldetag: 27.02.2004
(51) Int. Cl.: B60Q 1/52

(54) **Fahrerassistentensystem**

(30) Priorität: 25.04.2003 DE 10318741
(71) Anmelder: AUDI AG, 85045 Ingolstadt (DE)
(72) Erfinder: Popken, Markus, 85139 Wettstetten (DE); Zehle, Stefan, 85051 Ingolstadt (DE); Erlacher, Markus, 85055 Ingolstadt (DE); Vukotich, Alejandro, 85049 Ingolstadt (DE)
(74) Vertreter: Thielmann, Frank

(57) **Zusammenfassung**

Fahrerassistentensystem, insbesondere mit einem Spurwechselassistenten (2), das wenigstens einen Sensor (3,4,5) zur Überwachung des seitlichen und/oder rückwärtigen Fahrzeugumfelds aufweist, den Gefährdungsgrad für einen Spurwechsel errechnet und ein Warnsignal gibt, wenn ein Spurwechsel zu einer gefährlichen Situation führen würde, wobei ein den Gefährdungsgrad kontinuierlich anzeigendes optisches Anzeigemittel (8,9) vorgesehen ist.

## Beschreibung

Die Erfindung betrifft ein Fahrerassistentensystem, insbesondere einen Spurwechselassistenten, der wenigstens einen Sensor zur Überwachung des seitlichen und/oder rückwärtigen Fahrzeugumfelds aufweist, den Gefährdungsgrad für einen Spurwechsel errechnet und ein Warnsignal gibt, wenn ein Spurwechsel zu einer gefährlichen Situation führen würde.

Ein Fahrerassistentensystem dieser Art ist aus der DE 198 35 601 A1 bekannt. Das Fahrzeugassistenzsystem warnt den Fahrer, wenn sich in dem überwachten Raum neben oder hinter dem Fahrzeug wenigstens ein anderes Fahrzeug in einem kritischen Abstand befindet. Dadurch soll der Fahrer schon vor der Betätigung des Fahrtrichtungsanzeigers visuell erkennen können, ob ein Fahrspurwechsel gefahrlos möglich ist. Stellt das Assistenzsystem fest, dass der Fahrer einen Fahrspurwechsel beabsichtigt, so wird zusätzlich ein akustischer Warnhinweis ausgegeben.

Derartige Systeme weisen den Nachteil auf, dass der Fahrer von ihnen lediglich im Falle einer Gefahr profitiert. Ein vorsichtiger und umsichtiger Fahrer wird daher praktisch nie mit einer akustischen oder optischen Warnung des Systems konfrontiert werden. Obwohl ein vergleichsweise großer Aufwand betrieben wird, um andere Fahrzeuge im Umfeld des eigenen Fahrzeugs zu detektieren, die eine Gefahr darstellen könnten, werden diese Informationen nur zu einem sehr geringen Teil genutzt, um den Fahrer zu unterstützen.

Der Erfindung liegt daher das Problem zugrunde, ein Fahrerassistentensystem, insbesondere einen Spurwechselassistenten, zu schaffen, durch den der Fahrer besser unterstützt wird.

Zur Lösung dieses Problems ist bei einem Fahrerassistentensystem der eingangs genannten Art erfindungsgemäß vorgesehen, dass es ein den Gefährdungsgrad kontinuierlich anzeigendes optisches Anzeigemittel aufweist.

Anders als bei bekannten Fahrerassistentensystemen wird dem Fahrer nicht erst dann ein Warnsignal gegeben, wenn eine akute Gefahr droht, sondern er kann den aktuellen Gefährdungsgrad jederzeit an dem optischen Anzeigemittel ablesen. Das erfindungsgemäße Fahrerassistentensystem weist den Vorteil auf, dass der Fahrer das System als echte Hilfe beim Spurwechsel einsetzen kann, das seine Wahrnehmung aktiv erweitert und nicht nur im Notfall eine Warnung ausgibt. Die Information über den Gefährdungsgrad wird dem Fahrer ständig visuell angeboten und er kann sie nutzen, wenn er sie benötigt. Die optische Anzeige bleibt dabei im Hintergrund und wird nicht als störend empfunden, wenn der Fahrer sie nicht nutzen will. Ein weiterer Vorteil ist darin zu sehen, dass der Gefährdungsgrad bei einem Spurwechselassistenten ohnehin kontinuierlich errechnet wird, das heißt die benötigte technische Infrastruktur ist bei einem solchen System bereits vorhanden. Durch die Erfindung werden die im Spurwechselassistenten bzw. im Fahrerassistenzsystem vorhandenen Informationen besser genutzt und so aufbereitet, dass der Fahrer sich einfach ein Bild über das Fahrzeugumfeld machen kann. Auf diese Weise werden insbesondere Fahrzeuge erfasst, die sich von hinten nähern sowie Fahrzeuge, die sich im sogenannten toten Winkel befinden.

Gemäß einer Weiterbildung der Erfindung kann vorgesehen sein, dass der durch ein erfasstes Fahrzeug geänderte Gefährdungsgrad an dem optischen Anzeigemittel anzeigbar ist. Sobald sich ein Fahrzeug in dem seitlichen oder rückwärtigen Bereich befindet, der von dem wenigstens einen Überwachungssensor abgedeckt wird, kann die Tatsache, dass ein Fahrzeug vom Fahrerassistentensystem erfasst worden ist, optisch angezeigt werden. Diese Anzeige liefert dem Fahrer die Information, dass das System aktiv ist und gleichzeitig wird die Funktionsweise für den Fahrer transparenter, da das optische Anzeigemittel jeweils dann eingeschaltet wird, wenn ein Fahrzeug erfasst wird. Da der Fahrer den Zusammenhang zwischen erfassten Fahrzeugen und der optischen Anzeige erkennen kann, steigt das Vertrauen in die Zuverlässigkeit des Systems. Falls das optische Anzeigemittel ausgeschaltet ist oder nichts anzeigt, kann daraus geschlossen werden, dass gegenwärtig kein Fahrzeug erfasst ist. Dementsprechend liegt auch keine Gefährdung vor. In diesem Fall genügt es, wenn sich der Fahrer vor dem Spurwechsel durch einen Blick in den Außenspiegel vergewissert, dass die Fahrbahn gefahrlos gewechselt werden kann.

Besonders bevorzugt wird ein erfindungsgemäßes Fahrerassistentensystem, bei dem das optische Anzeigemittel an oder in wenigstens einem Rückspiegel angeordnet ist. Auf diese Weise kann der Fahrer gleichzeitig den aktuellen, vom System erfassten Gefährdungsgrad und das Bild des rückwärtigen Fahrzeugumfelds erfassen. Der Fahrer wird dadurch zwangsläufig dazu veranlasst, in den Rückspiegel zu blicken und kann nicht der Versuchung erliegen, sich allein auf das Fahrerassistentensystem zu verlassen. Der Blick in den Spiegel wird ihm daher nicht abtrainiert. Es ist auch vorteilhaft, dass der Fahrer keine weitere Kopf- oder Augenbewegung ausführen muss, um den Gefährdungszustand zu erfassen. Das optische Anzeigemittel kann im Bereich der Spiegelhalterung oder der Spiegelumrandung angeordnet sein. Es ist jedoch auch möglich, das optische Anzeigemittel in oder auf der Spiegelfläche anzubringen.

Gemäß einer Weiterbildung des Erfindungsgedankens kann vorgesehen sein, dass ein oder jeder Rückspiegel halbdurchlässig ist bzw. sind und das optische Anzeigemittel an der Rückseite der Spiegelfläche angeordnet ist. Auf diese Weise kann das optische Anzeigemittel dem Spiegelbild überlagert werden, wobei eine Überlagerung vorzugsweise nur dann stattfindet, wenn das Fahrerassistentensystem ein Fahrzeug erfasst hat.

Alternativ oder zusätzlich kann bei dem erfindungsgemäßen Fahrerassistentensystem vorgesehen sein, dass das optische Anzeigemittel wenigstens eine Lampe und/ oder eine Leuchtdiode und/oder einen Flachbildschirm umfasst. Grundsätzlich kommen alle optischen Anzeigemittel in Frage, die sich in einen Rückspiegel bzw. dessen Halterung integrieren lassen. Es ist auch möglich, mehrere Lampen oder Leuchtdioden zu verwenden, die verschiedenfarbige optische Signale abstrahlen. Die Spiegelfläche kann auch einen Flachbildschirm umfassen, so dass dem Fahrer besonders detaillierte Informationen gegeben werden können.

Neben der Anbringungsmöglichkeit in einem oder mehreren Rückspiegeln kann das optische Anzeigemittel des erfindungsgemäßen Fahrerassistentensystem in einem Kombiinstrument oder in der Anzeige eines Automatic-Cruise-Control-Systems angeordnet sein. Es ist natürlich auch möglich, dass ein optisches Anzeigemittel in einem Rückspiegel und gleichzeitig ein zweites optisches Anzeigemittel im Kombiinstrument aktiviert wird. Als weitere Alternative kann das optische Anzeigemittel in einem Head-Up-Display im Bereich der Frontscheibe angeordnet sein. Alle erwähnten Anbringungsorte können auch miteinander kombiniert werden, es wird jedoch bevorzugt, dass das optische Anzeigemittel als Signalisierungseinheit in den Außenspiegeln angeordnet ist.

Um den Informationswert der Anzeige zu erhöhen, kann es vorgesehen sein, dass die Anzeige des optischen Anzeigemittels in Abhängigkeit des ermittelten Gefährdungsgrads veränderbar ist. Wenn das Fahrerassistentensystem kein Fahrzeug erfasst hat, besteht logischerweise keine Gefahr, in diesem Fall kann die Anzeige minimiert oder ganz ausgeschaltet werden. Wenn sich jedoch mehrere Fahrzeuge in dem potentiell gefährlichen Fahrzeugumfeld befinden, wird die Anzeige so modifiziert, dass der Fahrer sie beim Blick in den Rückspiegel nicht übersehen kann.

Es ist daher besonders zweckmäßig, wenn die Größe und/oder die Farbe und/oder die Leuchtstärke des optischen Anzeigemittels in Abhängigkeit des Gefährdungsgrads veränderbar ist. Dementsprechend kann bei einem niedrigen Gefährdungsgrad eine kleine Anzeige oder beispielsweise eine grüne Lampe, gegebenenfalls mit einer geringen Leuchtstärke, verwendet werden, wohingegen bei einem hohen Gefährdungsgrad eine vergrößerte Anzeige mit roter Farbe und gegebenenfalls erhöhter Leuchtstärke durch das System gewählt wird. Die verschiedenen Variationsmöglichkeiten können auch einzeln verwendet werden. Es kann auch vorgesehen sein, dass durch das Anzeigemittel bei einem hohen Gefährdungsgrad ein Blinksignal ausgebbar ist.

Das erfindungsgemäße Fahrerassistentensystem umfasst wenigstens einen Sensor, der als Radar- und/oder Laser- und/oder Infrarot- und/oder Ultraschallsensor ausgebildet ist. Vorzugsweise werden jedoch drei Sensoren verwendet, von denen einer für das rückwärtige Fahrzeugumfeld und jeweils ein Sensor für die linke und die rechte Fahrzeugseite vorgesehen ist.

Erfindungsgemäß umfasst das Fahrerassistentensystem ein Mittel zum Detektieren der Spurwechselabsicht des Fahrers. Die Spurwechselabsicht wird entweder anhand eines gesetzten Blinkers oder durch ein Signal eines Lane-Departure-Warning-Systems oder durch ein Signal eines Lenkeinschlagsensors erfasst. Diese Erfassungsmöglichkeiten können auch miteinander kombiniert werden, um die Gefahr von Fehlern zu verringern.

Die Erfindung betrifft auch ein Kraftfahrzeug, das ein erfindungsgemäßes Fahrerassistentensystem aufweist.

Weitere Vorteile und Einzelheiten der Erfindung werden anhand eines besonders geeigneten Ausführungsbeispiels unter Bezugnahme auf die Figuren beschrieben. Die Figuren sind schematische Darstellungen und zeigen:
- Fig. 1: ein Fahrzeug mit einem erfindungsgemäßen Fahrerassistentensystem in einer Draufsicht; und
- Figuren 2a - c: einen Außenspiegel mit einem optischen Anzeigemittel zum Visualisieren unterschiedlicher Gefährdungsgrade.

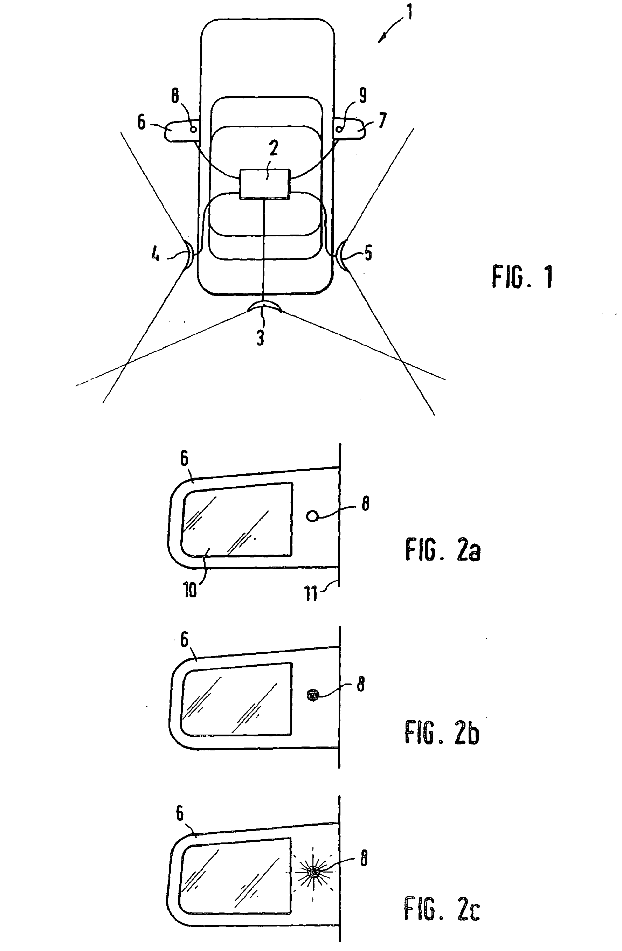

Fig. 1 zeigt ein Fahrzeug 1 mit einem Fahrerassistentensystem, das in dem dargestellten Ausführungsbeispiel als Spurwechselassistent 2 ausgebildet ist. Der Spurwechselassistent 2 umfasst ein Steuergerät zur Datenverarbeitung, ferner ist er an drei Sensoren 3, 4, 5 angeschlossen, die auf elektronischem Weg ein "Bild" des Fahrzeugumfelds hinter und neben dem Fahrzeug aufnehmen. Dadurch können Fahrzeuge erfasst werden, die sich von hinten nähern, sowie Fahrzeuge, die sich im sogenannten toten Winkel aufhalten. In dem Steuergerät des Spurwechselassistenten 2 ist ein Algorithmus implementiert, der auf der Basis der erfassten Sensordaten laufend den Gefährdungsgrad für den Fall eines sofortigen Spurwechsels berechnet. Dem System ist daher jederzeit bekannt, ob ein möglicher Spurwechsel kritisch wäre. Ein Spurwechsel wird dann als kritisch eingeschätzt, wenn er zu einer gefährlichen Situation führen würde, beispielsweise wenn sich ein anderes Fahrzeug mit einer zu hohen Geschwindigkeit nähert oder wenn die Lücke zum Einscheren nicht ausreicht. Die Spurwechselabsicht des Fahrers kann anhand des gesetzten Blinkers von dem Spurwechselassistenten 2 erkannt werden. Alternativ oder zusätzlich kann das Fahrzeug 1 auch ein Lane-Departure-Warning-System aufweisen, das fortlaufend über eine Kamera die Position des Fahrzeugs relativ zur Fahrbahn erfasst. Es ist auch möglich, dass dem Spurwechselassistenten 2 das Signal eines Lenkeinschlagsensors zugeführt wird. Ein Warnsignal wird dann ausgelöst, wenn die Spurwechselabsicht des Fahrers erkannt ist und dieser Spurwechsel kritisch wäre, das heißt wenn der Gefährdungsgrad zu hoch ist.

Das Fahrerassistentensystem des Fahrzeugs 1 wird jedoch nicht erst dann aktiv, wenn eine akute Gefahr droht, sondern der ermittelte Gefährdungsgrad wird fortlaufend angezeigt. Dazu sind der linke Außenspiegel 6 und der rechte Außenspiegel 7 jeweils mit einem optischen Anzeigemittel versehen, das in dem dargestellten Ausführungsbeispiel als Leuchtdiode 8, 9 ausgebildet ist. Die Leuchtdioden 8, 9 sind an den Außenspiegeln 6, 7 zwischen der Spiegelfläche 10 und der Fahrzeugaußenseite 11 im Bereich der Spiegelhalterung angeordnet. Die Leuchtdioden 8, 9 sind an das Steuergerät des Spurwechselassistenten 2 angeschlossen und werden durch ihn ein- und ausgeschaltet.

In den Figuren 2a - 2c ist der Außenspiegel 6 mit der Leuchtdiode 8 in einem vergrößerten Maßstab dargestellt. Die Leuchtdiode 8 befindet sich im Bereich der Halterung des Spiegels 6 zwischen der Spiegelfläche 10 und der Außenseite 11 des Fahrzeugs 1.

In Fig. 2a ist die Leuchtdiode 8 ausgeschaltet, da das Fahrerassistentensystem gegenwärtig kein Fahrzeug erfasst hat, dementsprechend ist der Gefährdungsgrad sehr gering. In dieser Situation besteht keine Gefährdung bei einem Spurwechsel, es ist daher nicht erforderlich, dass der Fahrer von dem Spurwechselassistenten 2 eine Warnung erhält. Wenn der Fahrer vor dem Spurwechsel in den Außenspiegel 6 blickt, kann er sich anhand der ausgeschalteten Leuchtdiode 8 vergewissern, dass der Spurwechsel gefahrlos möglich ist.

Fig. 2b zeigt den in Fig. 2a dargestellten Außenspiegel 6, nachdem wenigstens ein Fahrzeug von dem Spurwechselassistenten 2 erfasst worden ist. Nach der Erfassung eines Fahrzeugs wird die Leuchtdiode 8 eingeschaltet, so dass der Fahrer fortlaufend eine visuelle Information über den augenblicklichen Zustand des Systems erhält. Die eingeschaltete Leuchtdiode 8 kann z.B. grün leuchten, so dass sie sich deutlich von der in Fig. 2a gezeigten nicht eingeschalteten Leuchtdiode abhebt. Die Tatsache, dass der Spurwechselassistent 2 über seine Sensoren ein oder mehrere Fahrzeuge erfasst hat, bedeutet nicht zwangsläufig, dass eine Gefahr besteht, denn es könnte sein, dass das oder die erfassten Fahrzeuge langsamer als das Fahrzeug 1 fahren. Die eingeschaltete Leuchtdiode 8 wird vom Fahrer daher nicht als Warnhinweis, sondern als Information über den Zustand des Systems aufgefasst.

Fig. 2c zeigt den Zustand, wenn sich das andere Fahrzeug so angenähert hat, dass es sich im toten Winkel des Fahrzeugs 1 befindet. Die Position des sich nähernden Fahrzeugs wird von den Sensoren 3, 4, 5 des Spurwechselassistenten 2 erfasst und in dem Steuergerät ausgewertet. Wenn der Abstand zu dem anderen Fahrzeug zu gering und dessen Geschwindigkeit zu hoch ist, ist ein sicherer Spurwechsel nicht möglich. In dieser Situation wird der Spurwechselassistent 2 daher einen hohen Gefährdungsgrad ermitteln. Dieser hohe Gefährdungsgrad wird dem Fahrer visuell durch die in Fig. 2c dargestellte blinkende Leuchtdiode 8 dargestellt. Eine blinkende Lampe oder Leuchtdiode wird auch dann bemerkt, wenn sie sich am Rand des Blickfelds des Fahrers befindet. Sie wird jedoch spätestens dann vom Fahrer erfasst, wenn er zur Vorbereitung des Spurwechsels in den Außenspiegel 6 sieht. Auch wenn er auf der Spiegelfläche 10 das sich nähernde Fahrzeug möglicherweise nicht sieht, da es sich im toten Winkel befindet, wird er von einem Spurwechsel abgehalten, da er die blinkende Leuchtdiode 8 sieht. Die Leuchtdiode 8 kann so angesteuert werden, dass sie auch rot leuchtet, daher wird sie bei einem hohen Gefährdungsgrad so betrieben, dass sie ein rotes Blinksignal abgibt. Falls der Fahrer die warnende Leuchtdiode 8 übersieht, z.B. weil er vor dem beabsichtigten Spurwechsel nicht in den Außenspiegel 6 blickt, wird von dem Spurwechselassistenten 2 ein akustisches Warnsignal ausgegeben, sobald die Spurwechselabsicht z.B. anhand eines betätigten Fahrtrichtungsanzeigers erkannt ist.

## Patentansprüche

1. Fahrerassistentensystem, insbesondere mit einem Spurwechselassistenten, das wenigstens einen Sensor zur Überwachung des seitlichen und/oder rückwärtigen Fahrzeugumfelds aufweist, den Gefährdungsgrad für einen Spurwechsel errechnet und ein Warnsignal gibt, wenn ein Spurwechsel zu einer gefährlichen Situation führen würde,
**dadurch gekennzeichnet,**
**dass** ein den Gefährdungsgrad kontinuierlich anzeigendes optisches Anzeigemittel vorgesehen ist.

2. Fahrerassistentensystem nach Anspruch 1,
**dadurch gekennzeichnet,**
**dass** der durch ein erfasstes Fahrzeug geänderte Gefährdungsgrad an dem optischen Anzeigemittel anzeigbar ist.

3. Fahrerassistentensystem nach Anspruch 1 oder 2,
**dadurch gekennzeichnet,**
**dass** das optische Anzeigemittel an oder in wenigstens einem Rückspiegel (6, 7) angeordnet ist.

4. Fahrerassistentensystem nach Anspruch 3,
**dadurch gekennzeichnet,**
**dass** der oder die Rückspiegel halbdurchlässig ist bzw. sind und das optische Anzeigemittel an der Rückseite der Spiegelfläche angeordnet ist.

5. Fahrerassistentensystem nach einem der vorangehenden Ansprüche,
**dadurch gekennzeichnet,**
**dass** das optische Anzeigemittel wenigstens eine Lampe und/oder eine Leuchtdiode (8, 9) und/oder einen Flachbildschirm umfasst.

6. Fahrerassistentensystem nach einem der vorangehenden Ansprüche,
**dadurch gekennzeichnet,**
**dass** das optische Anzeigemittel in einem Kombiinstrument oder in der Anzeige eines Automatic-Cruise-Control-Systems angeordnet ist.

7. Fahrerassistentensystem nach einem der vorangehenden Ansprüche,
**dadurch gekennzeichnet,**
**dass** das optische Anzeigemittel in einem Head-up-Display im Bereich der Frontscheibe angeordnet ist.

8. Fahrerassistentensystem nach einem der vorangehenden Ansprüche,
**dadurch gekennzeichnet,**
**dass** die Anzeige des optischen Anzeigemittels in Abhängigkeit des ermittelten Gefährdungsgrads veränderbar ist.

9. Fahrerassistentensystem nach einem der vorangehenden Ansprüche,
**dadurch gekennzeichnet,**
**dass** die Größe und/oder die Farbe und/oder die Leuchtstärke des optischen Anzeigemittels in Abhängigkeit des Gefährdungsgrads veränderbar ist bzw. sind.

10. Fahrerassistentensystem nach Anspruch 9,
**dadurch gekennzeichnet,**
**dass** einem niedrigen Gefährdungsgrad eine kleine Anzeige und/oder eine grüne Farbe und/oder eine geringe Leuchtstärke und einem hohen Gefährdungsgrad eine vergrößerte Anzeige und/oder eine rote Farbe und/oder eine erhöhte Leuchtstärke zugeordnet ist.

11. Fahrerassistentensystem nach einem der vorangehenden Ansprüche,
**dadurch gekennzeichnet,**
**dass** bei einem hohen Gefährdungsgrad ein Blinksignal durch das Anzeigemittel ausgebbar ist.

12. Fahrerassistentensystem nach einem der vorangehenden Ansprüche,
**dadurch gekennzeichnet,**
**dass** der wenigstens eine Sensor (3, 4, 5) als Radar- und/oder Laserund/oder Infrarot- und/oder Ultraschallsensor ausgebildet ist.

13. Fahrerassistentensystem nach einem der vorangehenden Ansprüche,
**dadurch gekennzeichnet,**
**dass** ein Sensor (3) für das rückwärtige Fahrzeugumfeld und jeweils ein Sensor (4, 5) für die linke und rechte Fahrzeugseite vorgesehen ist.

14. Fahrerassistentensystem nach einem der vorangehenden Ansprüche,
**dadurch gekennzeichnet,**
**dass** es zum Detektieren der Spurwechselabsicht anhand eines gesetzten Blinkers und/oder eines Signals eines Lane-Departure-Warning-Systems und/oder anhand des Signals eines Lenkeinschlagsensors ausgebildet ist.

15. Kraftfahrzeug,
**dadurch gekennzeichnet,**
**dass** es ein Fahrerassistentensystem nach einem der vorangehenden Ansprüche aufweist.
